# EUROPEAN PATENT APPLICATION

(11) **EP 4 679 525 A1**
(43) Date of publication of application: **14.01.2026**
(21) Application number: 24895867.0
(22) Date of filing: 05.09.2024
(51) Int. Cl.: H01M 4/36, H01M 4/133, H01M 10/0525

(54) **NEGATIVE ELECTRODE ACTIVE MATERIAL, NEGATIVE ELECTRODE SHEET, BATTERY, AND ELECTRIC DEVICE**

(30) Priority: 30.11.2023 CN 202311641387
(71) Applicant: Contemporary Amperex Technology Co., Limited, Ningde, Fujian 352100 (CN)
(72) Inventor: CHEN, Mingyang, Ningde, Fujian 352100 (CN); KANG, Meng, Ningde, Fujian 352100 (CN)
(74) Representative: Ziebig Hengelhaupt Intellectual Property Attorneys Patentanwaltskanzlei PartGmbB
(86) International application number: PCT/CN2024/117233
(87) International publication number: WO 2025/112768

(57) **Abstract**

The present application relates to a negative-electrode active material, a negative electrode plate, a battery and an electrical apparatus. The negative-electrode active material includes an artificial graphite particle and a carbon layer disposed on at least a portion of a surface of the artificial graphite particle, where a volume average particle size Dᵥ50 of the negative-electrode active material satisfies: 3 µm ≤ Dᵥ50 ≤ 7 µm; and a volume distribution particle size Dᵥ1 of the negative-electrode active material satisfies: Dᵥ1 ≤ 1.5 µm.

## Description

### CROSS-REFERENCE TO RELATED APPLICATIONS

The present application claims the priority of Chinese patent application No. 202311641387.4 filed on November 30, 2023 and entitled "NEGATIVE-ELECTRODE ACTIVE MATERIAL, NEGATIVE ELECTRODE PLATE, BATTERY, AND ELECTRICAL APPARATUS", the entire content of which is incorporated herein by reference.

### TECHNICAL FIELD

The present application relates to a negative-electrode active material, a negative electrode plate, a battery, and an electrical apparatus.

### BACKGROUND

Batteries are widely applied because of advantages of reliable working performance, non-pollution, and a memoryless effect, etc. For example, with the increasing attention to environmental protection problems and the increasing popularity of new energy vehicles, the demand for power battery cells will show explosive growth.

However, as the application range of batteries becomes more and more extensive, the requirements on the performances of the batteries are becoming increasingly stringent. In a relatively low temperature environment, a battery has poor fast charging capability, and usually requires a longer charging time.

### SUMMARY

The present application provides a negative-electrode active material, a negative electrode plate, a battery and an electrical apparatus. When the negative-electrode active material is applied to a battery, the low-temperature fast charging capability of the battery can be improved.

In a first aspect, the present application proposes a negative-electrode active material. The negative-electrode active material includes an artificial graphite particle and a carbon layer disposed on at least a portion of a surface of the artificial graphite particle, where a volume average particle size Dᵥ50 of the negative-electrode active material satisfies: 3 µm ≤ Dv50 ≤ 7 µm; and a volume distribution particle size Dᵥ1 of the negative-electrode active material satisfies: Dᵥ1 ≤ 1.5 µm.

Therefore, in an embodiment of the present application, by adjusting the Dᵥ50 and Dᵥ1 of the negative-electrode active material, the diffusion capacity of lithium ions in the negative-electrode active material and the negative-electrode film layer can be simultaneously improved, and the side reaction between the negative-electrode active material and an electrolyte solution can be slowed down, which is beneficial to significantly improve the charging capacity under low temperature conditions.

In some embodiments, 0.8 µm ≤ Dᵥ1 ≤ 1.5 µm; optionally, 0.9 µm ≤ Dᵥ1 ≤ 1.3 µm; and further optionally, 0.9 µm ≤ Dᵥ1 ≤ 1.0 µm. The negative-electrode active material can further regulate the proportion of fine powder by further regulating the volume particle size distribution Dᵥ1. The inclusion of an appropriate amount of fine powder in the active material is beneficial to further improving the charging power under low temperature conditions.

In some embodiments, Dᵥ99 ≤ 18 µm; and optionally, 12 µm ≤ Dᵥ99 ≤ 18 µm. By further selecting the volume particle size distribution Dᵥ99, the low-temperature charging performance of the battery cell can be further improved.

In some embodiments, the negative-electrode active material includes a primary particle, and a number proportion of the primary particle in the negative-electrode active material is ≥ 90%; and optionally ≥ 95%. The secondary particle has a smaller particle size, which is beneficial to further shortening the migration path of lithium ions and improve the low-temperature fast charging capability of the battery cell.

In some embodiments, the negative-electrode active material has a gram capacity of 330 mAh/g to 340 mAh/g. The gram capacity of the negative-electrode active material is relatively high, and the energy density of the battery cell is relatively high. On the basis of this high energy density, the negative-electrode active material can also simultaneously improve the fast charging capability of the battery cell.

In some embodiments, the negative-electrode active material has tap density of 0.78 g/cm³ to 1.2 g/cm³; and optionally 0.9 g/cm³ to 1.1 g/cm³. The tap density of the negative-electrode active material is within the aforementioned range, which can enable good contact between particles in the negative-electrode film layer, which is beneficial to improving the fast charging capability of the battery cell; and due to the close stacking among the particles, the energy density of the battery cell can also be improved.

In some embodiments, a graphitization degree of the artificial graphite particle is 90% to 93%, and optionally 91% to 93%. When the graphitization degree of the artificial graphite particle is within the aforementioned range, the particle structure can have a larger interlayer spacing and a lower powder resistance at the same time, which can further improve the fast charging capability of the battery cell.

In some embodiments, an average thickness of the carbon layer is ≥ 2 nm, and optionally 2 nm to 20 nm. By cladding the surface of the artificial graphite particle with the carbon layer, the low-temperature fast charging performance of the battery cell can be further improved.

In a second aspect, the present application proposes a negative electrode plate including a negative-electrode current collector and a negative-electrode film layer disposed on at least one side of the negative-electrode current collector, where the negative-electrode film layer includes a negative-electrode active material, and the negative-electrode active material includes the negative-electrode active material according to any embodiment of the first aspect of the present application.

In a third aspect, the present application proposes a battery including the positive electrode plate according to any embodiment of the second aspect of the present application.

In a fourth aspect, the present application proposes an electrical apparatus including the battery according to any embodiment of the third aspect of the present application, and the battery is used for providing electric energy.

### BRIEF DESCRIPTION OF DRAWINGS

In order to illustrate technical solutions of the examples of the present application more clearly, a brief introduction of drawings to be used in the examples of the present application will be made below. Apparently, the drawings described below are merely some examples of the present application, and other drawings can be obtained according to these drawings by those skilled in the art without creative efforts.
FIG. 1 is a schematic view of an embodiment of a battery cell of the present application.
FIG. 2 is a schematic exploded view of the embodiment of the battery cell in FIG. 1.
FIG. 3 is a schematic view of an embodiment of a battery module of the present application.
FIG. 4 is a schematic view of an embodiment of a battery pack of the present application.
FIG. 5 is a schematic exploded view of the embodiment of the battery pack as shown in FIG. 4.
FIG. 6 is a schematic view of an embodiment of an electrical apparatus including the battery cell of the present application as a power source.
FIG. 7 is a first one of SEM pictures of the negative-electrode active material in Example 1 of the present application obtained by a scanning electron microscope.
FIG. 8 is a second one of SEM pictures of the negative-electrode active material in Example 1 of the present application obtained by a scanning electron microscope.

Description of reference numerals:
1. battery pack; 2. upper box; 3. lower box; 4. battery module;
5. battery cell; 51. case; 52. electrode assembly;
53. cover plate;
6. electrical apparatus

### DETAILED DESCRIPTION

Hereinafter, the embodiments of the negative-electrode active material, the negative electrode plate, the battery cell, the battery and the electrical apparatus of the present application are specifically disclosed with reference to the detailed description of the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. A range defined in this manner may be inclusive or exclusive of end values, and may be arbitrarily combined, that is, any lower limit may be combined with any upper limit to form a range. For example, if ranges of 60 to 120 and 80 to 110 are listed for a particular parameter, it is understood that ranges of 60 to 110 and 80 to 120 are also contemplated. Additionally, if the minimum range values 1 and 2 are listed, and if the maximum range values 3, 4, and 5 are listed, the following ranges are all contemplated: 1 to 3, 1 to 4, 1 to 5, 2 to 3, 2 to 4 and 2 to 5. In the present application, unless stated otherwise, the numerical range "a to b" represents an abbreviated representation of any combination of real numbers between a and b, where both a and b are real numbers. For example, the numerical range "0 to 5" means that all real numbers between "0 to 5" have been listed herein, and "0 to 5" is just an abbreviated representation of the combination of these numerical values. Additionally, when it is stated that a certain parameter is an integer of ≥ 2, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all steps S of the present application may be performed sequentially or randomly, and preferably sequentially. For example, the method includes steps S(a) and S(b), which means that the method may include steps S(a) and S(b) performed in order, or may include steps S(b) and S(a) performed in order. For example, the reference to the method may further include step S(c), meaning that step S(c) may be added to the method in any order. For example, the method may include steps S(a), S(b) and S(c), or may further include steps S(a), S(c) and S(b), or may further include steps S(c), S(a) and S(b), and the like.

The battery cell includes a positive electrode plate, a negative electrode plate and a separator. During the charge and discharge process of the battery cell, active ions are intercalated and deintercalated back and forth between the positive electrode plate and the negative electrode plate through the electrolyte solution. The negative electrode plate includes a negative-electrode current collector and a negative-electrode film layer disposed on at least one side of the negative-electrode current collector. The negative-electrode active material contained in the negative-electrode film layer is an important component of the battery cell, and the active ions can be intercalated in and deintercalated from the negative-electrode active material.

Under low temperature conditions, the conductivity of the electrolyte solution decreases, and the solid electrolyte interphase (SEI) membrane impedance, charge transfer impedance, and diffusion impedance of active ions in the negative electrode plate will increase, resulting in enhanced polarization and poor low temperature performance of the battery cell. The negative electrode plate is the key factor restricting the low-temperature dynamic performance of the battery cell. In order to improve the low-temperature dynamic performance of the battery cell, it is usually considered to improve the performance of the negative-electrode film layer, such as adjusting the thickness of the negative-electrode film layer, reducing the compaction density of the negative-electrode film layer, etc. However, the aforementioned manner has a limited effect on improving the dynamic performance of the battery cell during charging.

In view of the aforementioned problems, an embodiment of the present application provides a negative-electrode active material. The particle size distribution of the negative-electrode active material is regulated, and specifically the volume average particle sizes Dᵥ50 and Dᵥ1 of the negative-electrode active material are regulated, so that the kinetic performance of the battery cell in the early and late stages of charging can be significantly improved, and rapid charging of the battery cell can be achieved. Embodiments of the present invention will be described in detail hereinafter.

### Negative-electrode active material

In a first aspect, an embodiment of the present application provides a negative-electrode active material.

The negative-electrode active material includes an artificial graphite particle and a carbon layer disposed on at least a portion of a surface of the artificial graphite particle.

A volume average particle size Dᵥ50 of the negative-electrode active material satisfies: 3 µm ≤ Dᵥ50 ≤ 7 µm.

A volume particle size distribution Dᵥ1 of the negative-electrode active material satisfies: Dᵥ1 ≤ 1.5 µm.

When the negative-electrode active material satisfies the aforementioned particle size distribution conditions, it is possible to improve both the rapid charging performance under low temperature conditions and the high temperature cycling performance. It is speculated that the possible reasons are as follows:

The charging of the battery cell is a process in which active ions such as lithium ions and sodium ions are deintercalated from the positive-electrode active material and intercalated in the negative-electrode active material. In the battery field, the industry often uses the "state of charge (referred to as SOC for short)" to reflect the capacity of the battery after charging. Its numeral value is defined as the percentage of the existing capacity to the capacity of the battery after full charge, and the value range is 0 to 100%. When "SOC = 0", it means that the battery is not charged. When "SOC = 100%", it means that the battery is in a fully charged state. When "0 < SOC < 100%", it means that the battery has been charged and has a certain capacity, but has not been fully charged. In the embodiments of the present application, the early stage of charging is defined as a low SOC state (≤ 30% SOC), and the late stage of charging is defined as a high SOC state (≥ 60% SOC).

At a low temperature, the diffusion rate of active ions such as lithium ions between graphite layers is relatively slow, and the kinetic process of lithium ion intercalation in the negative electrode plate is relatively slow. The slow kinetics lead to overpotential, so that the actual potential of graphite lithium intercalation is close to the lithium metal deposition potential, which easily leads to lithium plating during low-temperature charging and deteriorates the low-temperature charging performance of the battery cell.

The volume average particle size Dᵥ50 of the negative-electrode active material is the particle size corresponding to when the cumulative volume distribution percentage of the negative-electrode active material reaches 50%. When the volume average particle size Dᵥ50 of the negative-electrode active material is 3 µm to 7 µm, the negative-electrode active material has a smaller particle size, a larger active area, and more active lithium intercalation sites. The number of lithium ions diffused to the surface of the negative-electrode active material increases, and the interface reaction speed of the negative-electrode active material is accelerated, which is beneficial to improving the kinetic performance of the battery cell at a low SOC state, thereby improving its fast charging capability. When the battery cell is in a high SOC state, the diffusion speed of lithium ions becomes the limiting step of the charging rate. The small particle size of the negative-electrode active material shortens the lithium intercalation path, accelerates the diffusion rate of lithium ions inside the negative-electrode active material, and can reduce polarization, which is beneficial to exertion of the low temperature performance of the battery cell. Therefore, the embodiments of the present application can regulate the diffusion channel and diffusion rate of lithium ions on the surface and inside of the negative-electrode active material by adjusting the volume average particle diameter Dᵥ50.

However, simply regulating the diffusion ability of lithium ions in the negative-electrode active material cannot effectively improve the low-temperature charging performance of the battery. It is also necessary to simultaneously regulate the diffusion ability of lithium ions in the negative-electrode film layer. Therefore, in addition to regulating the Dᵥ50 of the negative-electrode active material, the embodiments of the present application also simultaneously regulates the Dᵥ1. The volume particle size distribution Dᵥ1 of the negative-electrode active material is the particle size corresponding to when the cumulative volume distribution percentage of the negative-electrode active material reaches 1%. Regulating the Dᵥ1 can affect the proportion of fine powder in the negative-electrode active material. By regulating the Dᵥ1 ≤ 1.5 µm, the negative-electrode active material contains an appropriate amount of fine powder, which is beneficial to improving the charging power under low temperature conditions, and the negative-electrode active material does not expose too much active surface, which can slow down the side reaction between the negative-electrode active material and the electrolyte solution. Moreover, the agglomeration risk of the negative-electrode active material in the negative-electrode film layer is low, which can increase the porosity in the negative-electrode film layer and is beneficial to the diffusion of lithium ions in the negative-electrode film layer. In the embodiments of the present application, fine powder refers to particles with relatively small particle size.

Thus, in an embodiment of the present application, by adjusting the Dᵥ50 and Dᵥ1 of the negative-electrode active material, the diffusion capacity of lithium ions in the negative-electrode active material and the negative-electrode film layer can be simultaneously improved, and the side reaction between the negative-electrode active material and an electrolyte solution can be slowed down, which is beneficial to significantly improve the charging capacity under low temperature conditions.

In some embodiments, a volume particle size distribution Dᵥ99 of the negative-electrode active material satisfies: Dᵥ99 ≤ 18 µm.

In addition to regulating the Dᵥ50 and the Dᵥ1 of the negative-electrode active material, the embodiments of the present application can further regulate Dᵥ99. The volume particle size distribution Dᵥ99 of the negative-electrode active material is the particle size corresponding to when the cumulative volume distribution percentage of the negative-electrode active material reaches 99%. By regulating the Dᵥ99, the upper limit of the particle size of the negative-electrode active material can be basically regulated. The volume particle size distribution Dᵥ99 of the negative-electrode active material satisfies Dᵥ99 ≤ 18 µm. The upper limit of the particle size of the negative-electrode active material is relatively small. The consistency of the lithium intercalation degree of the negative-electrode active materials with different particle sizes is improved due to the small difference in particle size, and the polarization degree of the negative electrode plate is further reduced. Moreover, by regulating the overall particle size of the negative-electrode active material, the negative-electrode film layer has a better pore distribution, which can accelerate the diffusion speed of lithium ions in the negative-electrode film layer, thereby improving the low-temperature charging performance of the battery cell. In the embodiments of the present application, when Dᵥ99 ≤ 18 µm, the coating performance of the negative-electrode slurry can also be improved. The performance of coating the negative-electrode slurry into the negative-electrode film layer is relatively consistent, and scratches are not easily generated when thinly coated, thereby avoiding subsequent interface abnormalities, performance deterioration, and the like problems caused by scratches.

In summary, in the embodiments of the present application, by further simultaneously regulating the volume average particle size Dᵥ50, the Dᵥ1 and the Dᵥ99 of the negative-electrode active material, the active sites on the surface of the negative-electrode active material are increased, and the channels for lithium ion diffusion are increased. Since the lithium ion diffusion path is relatively shorter, its diffusion rate is improved; and the consistency of the lithium intercalation degree between the particles is improved, and the polarization degree of the negative electrode plate is reduced; and the diffusion ability of lithium ions in the negative-electrode film layer is improved, thereby significantly improving the kinetic performance of the battery cell in the early and late stages of charging, and the low-temperature fast charging capability of the battery cell can be improved.

The volume average particle size Dᵥ50 of the negative-electrode active material satisfies: 3 µm ≤ Dᵥ50 ≤ 7 µm. Specifically, Dᵥ50 can be 3 µm, 3.2 µm, 3.5 µm, 3.8 µm, 4 µm, 4.2 µm, 4.5 µm, 4.8 µm, 5 µm, 5.2 µm, 5.5 µm, 5.8 µm, 6 µm, 6.2 µm, 6.5 µm, 6.8 µm, 7 µm, or a range consisting of any two of the aforementioned values. By further selecting the volume average particle size Dᵥ50, the low-temperature charging performance of the battery cell can be further improved.

The volume particle size distribution Dᵥ1 of the negative-electrode active material satisfies: Dᵥ1 ≤ 1.5 µm. Specifically, Dᵥ1 can be 0.7 µm, 0.8 µm, 0.9 µm, 1.0 µm, 1.1 µm, 1.2 µm, 1.3 µm, 1.4 µm, 1.5 µm, or a range consisting of any two of the aforementioned values. Optionally, 0.8 µm ≤ Dᵥ1 ≤ 1.5 µm; further optionally, 0.9 µm ≤ Dᵥ1 ≤ 1.3 µm; and further optionally, 0.9 µm ≤ Dᵥ1 ≤ 1.0 µm. The negative-electrode active material can further regulate the proportion of fine powder by further regulating the volume particle size distribution Dᵥ1. The inclusion of an appropriate amount of fine powder in the active material is beneficial to further improving the charging power under low temperature conditions.

The volume particle size distribution Dᵥ99 of the negative-electrode active material satisfies: Dᵥ99 ≤ 18 µm. Specifically, Dᵥ99 can be 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 16.5 µm, 17 µm, 17.5 µm, 18 µm, or a range consisting of any two of the aforementioned values. Optionally, 12 µm ≤ Dᵥ99 ≤ 18 µm. By further selecting the volume particle size distribution Dᵥ99, the low-temperature charging performance of the battery cell can be further improved.

In some embodiments, the negative-electrode active material includes a primary particle.

Optionally, the number proportion of the primary particle in the negative-electrode active material is ≥ 90%; optionally ≥ 95%; optionally ≥ 98%; and optionally ≥ 99%. When the number proportion of the primary particle in the negative-electrode active material is 100%, it means that the negative-electrode active material is composed of the primary particle. The primary particle has a smaller particle size, which is beneficial to further shortening the migration path of lithium ions and improve the low-temperature fast charging capability of the battery cell.

In some embodiments, the negative-electrode active material has a gram capacity of 330 mAh/g to 340 mAh/g. The gram capacity of the negative-electrode active material is relatively high, and the energy density of the battery cell is relatively high. On the basis of this high energy density, the negative-electrode active material can also simultaneously improve the fast charging capability of the battery cell.

Illustratively, the gram capacity of the negative-electrode active material can be 330 mAh/g, 331 mAh/g, 332 mAh/g, 333 mAh/g, 334 mAh/g, 335 mAh/g, 336 mAh/g, 337 mAh/g, 338 mAh/g, 339 mAh/g, 340 mAh/g, or a range consisting of any two of the aforementioned values.

In some embodiments, the negative-electrode active material has tap density of 0.78 g/cm³ to 1.2 g/cm³; and optionally 0.9 g/cm³ to 1.1 g/cm³. The tap density of the negative-electrode active material is within the aforementioned range, which can enable good contact between particles in the negative-electrode film layer, which is beneficial to improving the fast charging capability of the battery cell; and due to the close stacking among the particles, the energy density of the battery cell can also be improved.

Illustratively, the tap density of the negative-electrode active material can be 0.78 g/cm³, 0.8 g/cm³, 0.82 g/cm³, 0.85 g/cm³, 0.88 g/cm³, 0.9 g/cm³, 0.92 g/cm³, 0.95 g/cm³, 0.98 g/cm³, 1 g/cm³, 1.05 g/cm³, 1.10 g/cm³, 1.15 g/cm³, 1.2 g/cm³, or a range consisting of any two of the aforementioned values.

in some embodiments, a graphitization degree of the artificial graphite particle is 90% to 93%, and optionally 91% to 93%. For example, the graphitization degree of the artificial graphite particle is 90%, 90.5%, 91%, 91.5%, 92%, 92.5%, 93% or a range consisting of any two of the aforementioned values. When the graphitization degree of the artificial graphite particle is within the aforementioned range, the particle structure can have a larger interlayer spacing and a lower powder resistance at the same time, which can further improve the fast charging capability of the battery cell.

The artificial graphite particle is formed by high-temperature heat treatment of a carbon source. The order of arrangement of carbon atoms in the carbon source may be poor, and it is mainly an ordered arrangement in a two-dimensional space, i.e., a turbostratic layer structure. After the high-temperature heat treatment, the disordered or two-dimensional ordered arrangement is transformed into an ordered arrangement in a three-dimensional space. That is, amorphous carbon is transformed into graphite. The process of ordering of atomic arrangement is the graphitization process, and the degree of ordering transformation is the degree of graphitization, which can be measured by X-ray diffraction.

At least a portion of the surface of the artificial graphite particle is cladded with a carbon layer, and the carbon layer mainly includes amorphous carbon. The amorphous carbon refers to a carbon material in a non-completely crystalline amorphous region or an amorphous solid state. The lattice structure of the amorphous carbon tends to be arranged disorderly, while the lattice structure of the artificial graphite particle tends to be arranged orderly, which can be observed and distinguished by transmission electron microscopy TEM. By cladding the surface of the artificial graphite particle with the carbon layer, the low-temperature fast charging performance of the battery cell can be further improved.

In some embodiments, the coverage of the carbon layer on the surface of the artificial graphite particle is ≥ 50%, and optionally 60% to 100%. When the coverage of the carbon layer on the surface of the artificial graphite particle is 100%, it can be understood that the carbon layer clads the entire surface of the artificial particle. When the coverage of the carbon layer on the surface of the artificial graphite particle is less than 100%, it can be understood that the carbon layer clads partial of the surface of the artificial particle.

In some embodiments, the average thickness of the carbon layer is ≥ 2 nm, and optionally 2 nm to 20 nm; for example, 2 nm to 15 nm, 2 nm to 10 nm, or 5 nm to 10 nm.

In the embodiments of the present application, the Dᵥ99, Dᵥ50, and Dᵥ1 of the negative-electrode active material can be detected by devices and methods known in the art. For example, a certain amount of the negative-electrode active material is taken as a sample, and the volume average particle size Dᵥ50, the volume particle size distribution Dᵥ99, and the volume particle size distribution Dᵥ1 of the sample are tested by a Mastersizer 2000E laser particle size analyzer according to the test standard GB/T19077-2016, where the Dᵥ99 is the particle size corresponding to when the cumulative volume distribution percentage of the negative-electrode active material reaches 99%; the Dᵥ50 is the particle size corresponding to when the cumulative volume distribution percentage of the negative-electrode active material reaches 50%; and the Dᵥ1 is the particle size corresponding to when the cumulative volume distribution percentage of the negative-electrode active material reaches 1%.

In the embodiments of the present application, the prepared negative-electrode active material can be directly taken as a sample for detection, or the negative-electrode active material can be prepared into a negative electrode plate, and the negative electrode plate can be tested for ion polishing cross-sectional morphology (CP) to observe the material type of the graphite in the negative-electrode active material. As an example, the test method may be: firstly, the prepared negative electrode plate is cut into a sample to be tested of a certain size (e.g., 2 cm × 2 cm), and the negative electrode plate is fixed on a sample stage by paraffin. Then the sample stage is loaded into a sample holder and fixed by locking, an argon ion cross-section polisher (e.g. IB-19500CP) is powered on and vacuumed (e.g. 10⁻⁴ Pa), the argon gas flow (e.g. 0.15 MPa), voltage (e.g. 8 KV) and polishing time (e.g. 2 hours) are set, and the sample stage is adjusted to a rocking mode to start polishing. For sample testing, please refer to JY/T010-1996. An area can be randomly selected from the sample to be tested for scanning test, and an ion polishing cross-sectional morphology (CP) picture of the negative electrode plate is acquired at a certain magnification (e.g., 5,000 times).

In the embodiments of the present application, the structure of the negative-electrode active material (e.g., the artificial graphite particle and the carbon layer) can be tested by devices and methods known in the art. As an example, the following steps S can be followed: a microgrid of a certain diameter (e.g. a diameter of 3 mm) is selected, the edge of the microgrid is clamped with pointed tweezers, the microgrid is put with the film face of it facing up (the glossy face observed under the light, i.e. the film face), and placed gently on white filter paper; an appropriate amount of the negative-electrode active material sample (e.g., 1 g) is taken and added into a beaker containing an appropriate amount of ethanol, and subjected to ultrasonic oscillation for 10 min to 30 min; the sample to be tested is pipetted with a glass micropipette, and then 2-3 drops of the sample to be tested is added dropwise onto the microgrid; after baking in an oven for 5 min, the microgrid added dropwise with the sample to be tested is placed onto the sample stage, and tested with a transmission electron microscope (e.g., Hitachi HF-3300SCs-corrected STEM) at a certain magnification (e.g., 60,000 times) to obtain a transmission electron microscope (TEM) image of the sample to be tested.

In the embodiments of the present application, both primary particles and secondary particles have meanings well known in the art. Among them, primary particles refer to non-agglomerated particles; and secondary particles refer to agglomerated particles formed by the aggregation of two or more primary particles. The primary particles and the secondary particles can be easily distinguished by taking SEM images using a scanning electron microscope.

The number proportion of primary particles in the negative-electrode active material can be tested using methods known in the art. An exemplary test method is as follows: the negative-electrode active material is laid and adhered to the conductive glue to prepare a sample to be tested with a length × width = 6 cm × 1.1 cm; and the particle morphology is tested using a scanning electron microscope (e.g., ZEISS Sigma 300). For testing, please refer to JY/T010-1996. In order to ensure the accuracy of the test results, multiple (e.g., 5) different areas can be randomly selected in the sample to be tested for scanning testing, and at a certain magnification (e.g., 1,000 times), the percentage of the number of primary particles in each area to the total number of particles is calculated, i.e., the number proportion of the primary particles in the area, and the average value of the test results of multiple test areas is taken as the number proportion of the primary particles in the negative-electrode active material. In order to ensure the accuracy of the test results, multiple test samples (e.g., 10) may be taken to repeat the aforementioned test, and the average value of each test sample is taken as the final test result.

In the embodiments of the present application, the graphitization degree of the artificial graphite particles in the negative-electrode active material has a meaning well-known in the art, and can be tested by methods known in the art. For example, an X-ray diffractometer (e.g., Bruker D8 Discover) can be used. The test can be conducted with reference to JIS K0131-1996 and JB/T4220-2011 to measure the size of d₀₀₂, and then the graphitization degree is calculated according to the formula G = (0.344 - d₀₀₂)/(0.344 - 0.3354) × 100%, where d₀₀₂ is the interlayer spacing in the graphite crystal structure expressed in nanometers (nm). In the X-ray diffraction analysis test, a copper target can be employed as an anode target, CuK_{α} rays can be used as a radiation source, the ray wavelength λ = 1.5418 Å, the scanning 2θ angle range is 20° to 80°, and the scanning rate can be 4°/min.

In the embodiments of the present application, the tap density of the negative-electrode film layer has a meaning well-known in the art, and can be tested by methods known in the art. For example, the standard GB/T5162-2006 can be referred to, and the powder tap density tester can be used for determination. If the FZS4-4B tap density tester produced by China Iron & Steel Research Institute is used, the test parameters are as follows: vibration frequency: 250 ± 15 times/minute, amplitude: 3 ± 0.2 mm, number of vibrations: 5,000 times, and a measuring cylinder: 25 mL.

In the embodiments of the present application, the gram capacity of the negative-electrode film layer has a meaning well-known in the art, and can be tested by methods known in the art. An exemplary test method is as follows: the prepared negative-electrode active material as the negative-electrode active material, carbon black (SuperP) as a conductive agent, and polyvinylidene fluoride (PVDF) as a binder are mixed evenly with N-methyl pyrrolidone (NMP) as a solvent in a mass ratio of 91.6:1.8:6.6 to prepare a slurry; and the prepared slurry is coated onto a copper foil current collector, and dried in an oven for later use. A lithium metal sheet is used as a counter electrode, and a polyethylene (PE) film is used as a separator. Ethylene carbonate (EC), ethyl methyl carbonate (EMC) and diethyl carbonate (DEC) are mixed in a volume ratio of 1:1:1, and then LiPF₆ is uniformly dissolved in the aforementioned solution to obtain an electrolyte solution in which the concentration of LiPF₆ is 1 mol/L. A CR2430 button battery is assembled in an argon-protected glove box. After the obtained button battery is allowed to stand for 12 hours, it is discharged at a constant current of 0.05 C to 0.005 V at 25°C, allowed to stand for 10 minutes, and then discharged at a constant current of 50 µA to 0.005 V, allowed to stand for 10 minutes, then discharged at a constant current of 10 µA to 0.005 V; and then charged at a constant current of 0.1 C to 2 V, and the charging capacity is recorded. A ratio of the charging capacity to the mass of the negative-electrode active material is the gram capacity of the prepared negative-electrode active material.

It should be noted that, in the aforementioned tests of various parameters of the negative-electrode active material, negative-electrode active material samples can be taken directly for testing, or a sample can be taken from the battery cell for testing.

When the aforementioned test sample is sampled from the battery cell, as an example, the sampling can be performed in the following steps S:
(1) The battery cell is subjected to discharging treatment (for safety reasons, the battery is generally in a fully discharged state); the battery is disassembled, the negative electrode plate is taken out and soaked in dimethyl carbonate (DMC) for a certain time (e.g., 2 to 10 hours); and then, the negative electrode plate is taken out and subjected to drying treatment at a certain temperature for a certain time (e.g., 60°C for 4 h), and thereafter, the dried negative electrode plate is taken out.
(2) The dried negative electrode plate in the step S(1) is baked at a certain temperature for a certain time (e.g., 400°C for 2 h), and a region in the baked negative electrode plate is randomly selected for sampling the negative-electrode active material (the sample can be taken by scraping using a blade to obtain sample powder).
(3) The negative-electrode active material collected in the step S(2) is subjected to sieving treatment (e.g., sieving with a 200-mesh sieve), and finally a negative-electrode active material sample that can be used for testing the aforementioned material parameters in the present application is obtained.

### Method for preparing a negative-electrode active material

In a second aspect, an embodiment of the present application provides a method for preparing a negative-electrode active material.

The method includes:
step S100. providing an artificial graphite particle; and
step S200. cladding the artificial graphite particle to form a carbon layer on at least a portion of the surface of the artificial graphite particle to obtain a negative-electrode active material,
where, a volume average particle size Dᵥ50 of the negative-electrode active material satisfies: 3 µm ≤ Dᵥ50 ≤ 7 µm.

A volume distribution particle size Dᵥ1 of the negative-electrode active material satisfies: Dᵥ1 ≤ 1.5 µm.

In some embodiments, the step S100 can specifically include:
step S110. providing a coke raw material;
step S120. subjecting the coke raw material to shaping treatment to obtain a precursor; and
step S130. subjecting the precursor to graphitization treatment to obtain an artificial graphite particle.

In the step S110, the coke raw material can be directly commercially available, or can be obtained by pulverizing a coke material.

In some embodiments, the coke material can be subjected to pulverizing treatment. The coke material can be pulverized using devices and methods known in the art, e.g. a jet mill, a mechanical mill, or a roller mill. The pulverizing process often produces a large number of undersized particles, and sometimes there are also oversized particles. Therefore, after pulverizing, grading treatment can be carried out as desired to remove the undersized and oversized particles in the pulverized powder. After the grading treatment, a coke raw material with desired particle size distribution can be obtained. The grading treatment can be carried out using devices and methods known in the art, e.g. a classification screen, a gravity classifier, a centrifugal classifier, and the like.

The pulverizing treatment of the coke material can be carried out in a process unit including a pulverizer, a classifier and an induced draft fan. During the pulverization process, the Dᵥ50, Dᵥ1 and Dᵥ99 of the obtained coke raw material can be regulated within the desired range by regulating the feeding frequency, pulverization frequency, classification frequency and induced draft frequency. Compared with the low classification frequency in the traditional pulverization process, the method of the present application can increase the classification frequency, which is conducive to removing undersized particles. Compared with the high induced draft frequency in the traditional pulverization process, the method of the present application can reduce the induced draft frequency, which is conducive to removing oversized particles. Additionally, compared with the traditional pulverizing process in which the frequency is controlled within a wider range, the method of the present application can also control the main engine frequency, classification frequency, and induced draft frequency within a narrower frequency range, thereby reducing the particle size distribution width of the coke raw material, for example, regulating the particle size of the coke raw material within a narrower range. The feeding frequency can also be regulated synchronously to control the feeding amount, which can further improve the pulverizing effect on the material.

In some embodiments, the coke raw material in the step S110 may include one or more of petroleum-based non-needle coke and petroleum-based needle coke. Optionally, the coke raw material includes petroleum green coke.

In some embodiments, in the step S120, the coke raw material can be subjected to shaping treatment using devices and methods known in the art, for example a shaping machine or other shaping devices.

In some embodiments, after the shaping treatment, the coke raw material can be further subjected to grading treatment. The grading treatment can be carried out using devices and methods known in the art, e.g. a classification screen, a gravity classifier, a centrifugal classifier, and the like.

The shaping treatment and the grading treatment can be carried out in a process unit including a shaping machine, a classifier and an induced draft fan. During the process of the shaping treatment and the grading treatment, the particle size of the obtained precursor can be controlled within the desired range by regulating the shaping frequency (e.g. the main machine frequency and auxiliary machine frequency of the shaping machine), the grading frequency, and the induced draft frequency. Compared with the traditional shaping and grading processes, the method of the present application increases the shaping frequency during the treatment process, appropriately extends the shaping time, and also reduces the grading frequency and induced draft frequency during the treatment process, so that the particle size of the obtained precursor is controlled within the target range.

In some embodiments, in the step S130, the precursor is subjected to graphitization treatment at a temperature of 2,800°C to 3,200°C to obtain artificial graphite with an appropriate graphitization degree. Optionally, the temperature of the graphitization treatment may be 2,900°C to 3,100°C.

In the step S130, graphitization may be performed using devices known in the art, for example a graphitization furnace, and further for example an Acheson graphitization furnace. After the graphitization treatment is completed, a small amount of oversized particles formed by agglomeration during the high-temperature graphitization process can be removed by sieving, which is beneficial to making the Dᵥ50, Dᵥ1 and Dᵥ99 of the final resultant negative-electrode active material within the desired range.

In some embodiments, in the step S200, the artificial graphite particle is cladded with an organic carbon source, and subjected to heat treatment to form an amorphous carbon layer on at least a portion of the surface of the artificial graphite particle, so as to obtain a negative-electrode active material.

As an example, the artificial graphite obtained in the step S130 can be mixed with an organic carbon source, so that the organic carbon source is cladded on at least a portion of the surface of the artificial graphite; then heat treatment is conducted at a temperature of 700°C to 1,800°C to carbonize the organic carbon source and form an amorphous carbon layer on at least a portion of the surface of the artificial graphite. Optionally, the temperature of the heat treatment is 1,100°C to 1,400°C, and the time of the heat treatment is 1 h to 5 h. Optionally, a mass ratio of the artificial graphite to the organic carbon source is 98:2 to 75:25.

In some embodiments, the organic carbon source can be selected from one or more of asphalt (e.g. coal pitch, petroleum asphalt), phenolic resin, coconut shell, etc., and is optionally further asphalt.

In the aforementioned preparation process, the coke raw material usually contains some impurity elements (e.g. iron, nickel, chromium, zinc, sulfur, silicon, etc.), and the devices used in the pulverizing and shaping processes will also introduce some impurity elements (e.g. iron, copper, etc.). Under normal circumstances, the content of impurity elements in the core is very small, and generally less than 1 ppm.

In the aforementioned preparation process, the organic carbon source used in the cladding process and the device used for the cladding will introduce trace impurity elements into the cladding layer.

### Negative electrode plate

In a third aspect, an embodiment of the present application further provide a negative electrode plate including a negative-electrode current collector and a negative-electrode film layer that is disposed on at least one surface of the negative-electrode current collector and includes a negative-electrode active material. The negative-electrode active material includes the negative-electrode active material according to any embodiment of the first aspect of the present application or a negative-electrode active material prepared by the method according to any embodiment of the second aspect of the present application. For example, the negative-electrode current collector has two surfaces opposite in its own thickness direction, and the negative-electrode film layer is disposed on either or both of the two opposite surfaces of the negative-electrode current collector.

In some embodiments, the negative-electrode active material may further include at least one of natural graphite, soft carbon, hard carbon, a silicon-based material, a tin-based material, and lithium titanate. The silicon-based material may include at least one of elemental silicon, a silicon oxide, a silicon-carbon composite, a silicon-nitrogen composite, and a silicon alloy material. The tin-based material may include at least one of elemental tin, a tin oxide, and a tin alloy

In some embodiments, the negative-electrode film layer further optionally includes a negative-electrode conductive agent. The embodiments of the present application has no specific limitation on the type of the negative electrode conductive agent, and as an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on a total weight of the negative-electrode film layer, a percentage mass content of the negative-electrode conductive agent is ≤ 5%.

In some embodiments, the negative-electrode film layer further optionally includes a negative-electrode binder. The embodiments of the present application has no specific limitation on the type of the negative electrode binder, and as an example, the negative electrode binder may include at least one of styrene butadiene rubber (SBR), a water-soluble unsaturated resin SR-1B, a water-based acrylic resin (e.g., polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS). In some embodiments, based on the total weight of the negative-electrode film layer, a percentage mass content of the negative-electrode binder is ≤ 5%.

In some embodiments, the negative-electrode film layer further optionally includes other auxiliaries. As an example, the other auxiliaries may include a thickener, e.g., carboxymethyl cellulose sodium (CMC-Na), a PTC thermistor material, and the like. In some embodiments, based on the total weight of the negative-electrode film layer, a percentage mass content of the other auxiliaries is ≤ 2%.

In some embodiments, the negative-electrode current collector can be a metal foil or a composite current collector. As an example of the metal foil, a copper foil can be used. The composite current collector may include a high molecular material substrate layer and a metal material layer formed on at least one surface of the high molecular material substrate layer. As an example, the metal material may include at least one of copper, a copper alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The negative-electrode film layer is usually formed by coating a negative-electrode slurry onto the negative-electrode current collector, followed by drying and cold pressing. The negative electrode slurry is generally formed by dispersing the negative electrode active material, the optional conductive agent, the optional binder, and the other optional auxiliaries in a solvent and evenly stirring the mixture. The solvent may be N-methyl pyrrolidone (NMP) or deionized water, but is not limited thereto.

The negative electrode plate does not exclude other additional functional layers other than the negative-electrode film layer. For example, in some embodiments, the negative electrode plate in the embodiments of the present application further includes a conductive primer coating layer (e.g., composed of a conductive agent and a binder) sandwiched between the negative-electrode current collector and the negative-electrode film layer and disposed on a surface of the negative-electrode current collector. In some other embodiments, the negative electrode plate in the embodiments of the present application further includes a protective layer covering a surface of the negative-electrode film layer.

### Battery cell

In a fourth aspect, an embodiment of the present application further provides a battery cell.

The battery cell is also referred to as a rechargeable battery or a storage battery, and refers to a battery that can be used continually by activating an active material in a charging mode after the battery is discharged. Typically, the battery cell includes an electrode assembly and an electrolyte solution. The electrode assembly includes a positive electrode plate, a negative electrode plate, and a separator. The separator is disposed between the positive electrode plate and the negative electrode plate, and its main function is to prevent a positive electrode and a negative electrode from short-circuiting, while allowing active ions to pass through.

In some embodiments, the battery cell includes the negative electrode plate according to any embodiment of the third aspect of the present application. Therefore, the battery cell in the embodiments of the present application can effectively improve the low-temperature fast charging capability of the battery cell.

### [Positive electrode plate]

The battery cell includes a positive electrode plate, the positive electrode plate includes a positive-electrode current collector and a positive-electrode film layer disposed on at least one side of the positive-electrode current collector, and the positive-electrode film layer includes a positive-electrode active material.

The positive-electrode active material can include, but is not limited to, at least one of a lithium transition metal oxide, a lithium-containing phosphate, and respective modified compounds thereof. Examples of the lithium transition metal oxide can include, but are not limited to, at least one of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, and respective modified compounds thereof. Examples of the lithium-containing phosphate can include, but are not limited to, at least one of lithium iron phosphate, a composite material of lithium iron phosphate and carbon, lithium manganese phosphate, a composite material of lithium manganese phosphate and carbon, lithium iron manganese phosphate, a composite material of lithium iron manganese phosphate and carbon, and respective modified compounds thereof.

In some embodiments, for further improving the energy density of the battery cell, the positive-electrode active material for the lithium-ion battery may include at least one of a lithium-containing transition metal oxide with a general formula of LiₐNi_{b}Co_{c}M_{d}OₑA_{f}, and modified compounds thereof. 0.8 ≤ a ≤ 1.2, 0.5 ≤ b < 1,0 < c < 1,0 < d < 1, 1 ≤ e ≤ 2, 0 ≤ f ≤1, M includes at least one of Mn, Al, Zr, Zn, Cu, Cr, Mg, Fe, V, Ti, and B, and A includes at least one of N, F, S, and Cl.

As an example, the positive-electrode active material for the lithium-ion battery may include at least one of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.80}Co_{0.15}Al_{0.05}O₂, LiFePO₄, LiMnPO₄.

In the embodiments of the present application, the modified compounds of the aforementioned positive-electrode active materials may be obtained by performing doping modification and/or surface cladding modification on the positive-electrode active materials.

The battery cell will be accompanied by the deintercalation and consumption of active ions e.g. Li in the charging and discharging process, and a molar content of Li in the battery cell differs when the battery cell is discharged to different states. In the enumeration of positive-electrode active materials in the embodiments of the present application, the molar content of Li is an initial state of the material, that is, a state before feeding. The positive-electrode active material is applied in a battery system, and the molar content of Li may change after charge-discharge cycles.

In the enumeration of positive-electrode active materials in the present application, the molar content of oxygen is only a theoretical state value. The release of oxygen from a lattice will cause the molar content of oxygen to change. The actual molar content of oxygen will fluctuate.

In some embodiments, based on the total mass of the positive-electrode film layer, a percentage mass content of the positive-electrode active material may be 85 wt% to 95 wt%. The positive-electrode active material in this content range can give the positive electrode plate a higher capacity and better cycling performance.

In some embodiments, the positive-electrode film layer further optionally includes a positive-electrode conductive agent. The embodiments of the present application has no specific limitation on the type of the positive-electrode conductive agent, and as an example, the positive-electrode conductive agent includes at least one of superconducting carbon, conductive graphite, acetylene black, carbon black, Ketjen black, carbon dots, carbon nanotubes, graphene, and carbon nanofibers. In some embodiments, based on a total mass of the positive-electrode film layer, a percentage mass content of the positive-electrode conductive agent is ≤ 5%.

In some embodiments, the positive-electrode film layer further optionally includes a positive-electrode binder. The embodiments of the present application has no specific limitation on the type of the positive-electrode binder, and as an example, the positive-electrode binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin. In some embodiments, based on a total mass of the positive-electrode film layer, a percentage mass content of the positive-electrode binder is ≤ 5%.

In some embodiments, the positive electrode current collector can be a metal foil or a composite current collector. As an example of the metal foil, an aluminum foil can be used. The composite current collector may include a high molecular material substrate layer and a metal material layer formed on at least one surface of the high molecular material substrate layer. As an example, the metal material of the metal material layer may include at least one of aluminum, an aluminum alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The positive-electrode film layer is generally formed by coating a positive electrode slurry on the positive-electrode current collector, followed by drying and cold pressing. The positive-electrode slurry is generally formed by dispersing the positive-electrode active material, the optional conductive agent, the optional binder and any other components in a solvent and sufficiently stirring the mixture. The solvent may be N-methyl pyrrolidone (NMP), but is not limited thereto.

### [Electrolyte solution]

In some embodiments, the battery cell further includes an electrolyte solution.

During a charging and discharging process of the battery cell, active ions are intercalated and deintercalated back and forth between the positive electrode plate and the negative electrode plate, and the electrolyte solution serves to conduct the active ions between the positive electrode plate and the negative electrode plate. The embodiments of the present application has no specific limitation on the type of the electrolyte solution, and it can be selected according to actual requirements.

The electrolyte solution includes an electrolyte salt and a solvent. Types of the electrolyte salt and the solvent are not specifically limited, and may be selected according to actual requirements.

As an example, the electrolyte salt may include, but is not limited to at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), bistrifluoromethanesulfonimide lithium (LiTFSI), lithium triflate (LiTFS), lithium difluoro(oxalato)borate (LiDFOB), lithium dioxalato borate (LiBOB), lithium difluorophosphate (LiPO₂F₂), lithium difluoro bis(oxalato)phosphate (LiDFOP) and lithium tetrafluoro(oxalato)phosphate (LiTFOP).

As an example, the solvent can include, but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methylpropyl carbonate (MPC), ethylpropyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate, methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, an additive is optionally included in the electrolyte solution. For example, the additive may include a negative electrode film-forming additive, or may include a positive electrode film-forming additive, and may further include an additive capable of improving certain performances of a battery, such as an additive for improving an overcharging performance of the battery, an additive for improving a high temperature performance of the battery, an additive for improving a low temperature performance of the battery, etc.

### [Separator]

In some embodiments, the battery cell further includes a separator. The embodiments of the present application has no particular limitation on the types of the separator, and any well-known separator of a porous structure with good chemical stability and mechanical stability can be selected for use.

In some embodiments, the material of the separator may include at least one of a glass fiber, non-woven fabric, polyethylene, polypropylene, and polyvinylidene difluoride. The separator may be a single-layer thin film or a multi-layer composite thin film, and is not particularly limited. When the separator is a multi-layer composite film, materials in all layers may be same or different, which is not particularly limited.

In some embodiments, the positive electrode plate, the separator, and the negative electrode plate may be made into an electrode assembly by a winding process and/or a stacking process.

In some embodiments, the battery cell may include an outer package. The outer package can be used for encapsulating the above-mentioned electrode assembly and electrolyte solution.

In some embodiments, the outer package of the battery cell may be a hard shell, such as a hard plastic shell, an aluminum shell, and a steel shell. The outer package of the battery cell may also be a soft package, such as a bag-type soft package. A material of the soft package may be plastic, e.g. at least one of polypropylene (PP), polybutylene terephthalate (PBT), and polybutylene succinate (PBS).

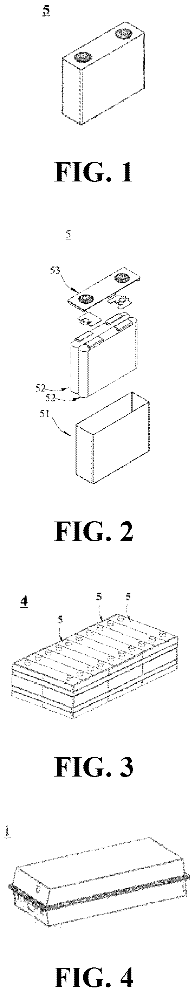

The embodiments of the present application has no specific limitation on the shape of the battery cell, which can be cylindrical, square or any other shape. For example, FIG. 1 shows a battery cell 5 in a square structure as an example.

In some embodiments, as shown in FIG. 2, the outer package may include a case 51 and a cover plate 53. The case 51 may include a bottom plate and a side plate connected to the bottom plate, and the bottom plate and the side plate enclose to form an accommodating cavity. The case 51 has an opening in communication with the accommodating cavity, and the cover plate 53 is configured to cover the opening to close the accommodating cavity. The positive electrode plate, the negative electrode plate, and the separator film may form an electrode assembly 52 by a winding process and/or a stacking process. The electrode assembly 52 is encapsulated in the accommodating cavity. An electrolyte solution infiltrates into the electrode assembly 52. The number of the electrode assemblies 52 included in the battery cell 5 can be one or more, which can be adjusted according to requirements.

A method for preparing the battery cell according to the embodiments of the present application is well known. In some embodiments, the positive electrode plate, the separator, the negative electrode plate, and the electrolyte solution may be assembled to form the battery cell. As an example, the positive electrode plate, the separator, and the negative electrode plate may form the electrode assembly by a winding process and/or a lamination process; the electrode assembly is placed in the outer package, oven-dried, and poured with the electrolyte solution; and the battery cell is obtained through processes such as vacuum encapsulation, standing, chemical formation, and shaping.

In some of the embodiments of the present application, the battery cell according to the embodiments of the present application can be assembled into a battery module, the number of battery cells included in the battery module may be multiple, and the specific number can be adjusted according to the application and capacity of the battery module.

FIG. 3 is a schematic view of a battery module 4 as an example. As shown in FIG. 3, in the battery module 4, a plurality of battery cells 5 may be sequentially arranged in a length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some embodiments, the aforementioned battery module can further be assembled into a battery pack, and the number of battery modules included in the battery pack can be adjusted according to the application and capacity of the battery pack. All of the battery cell, the battery module and the battery pack can be used as examples of batteries.

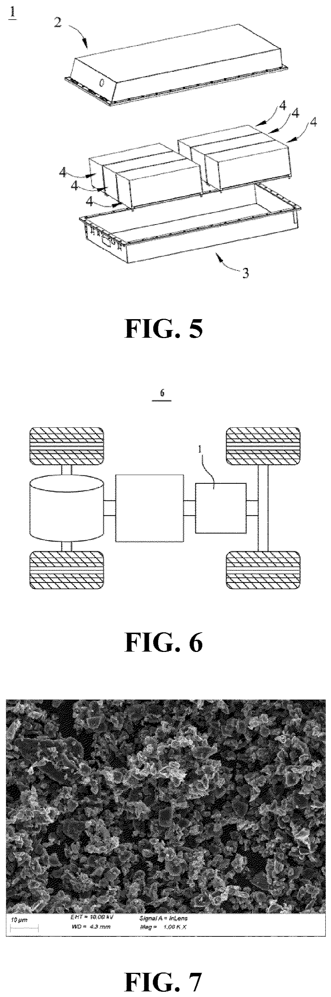

FIGs. 4 and 5 are schematic views of a battery pack 1 as an example. As shown in FIGs. 4 and 5, the battery pack 1 can include a battery box and a plurality of battery modules 4 arranged in the battery box. The battery box includes an upper box 2 and a lower box 3. The upper box 2 is used for covering the lower box 3 to form an enclosed space for accommodating the battery module 4. The plurality of battery modules 4 may be arranged in the battery box in any manner.

### Electrical apparatus

In a fifth aspect, an embodiment of the present application provides an electrical apparatus including at least one of the battery cell, the battery module, or the battery pack according to the embodiments of the present application. The battery cell, the battery module, or the battery pack may be used as a power source of the electrical apparatus, or may be used as an energy storage unit of the electrical apparatus. The electrical apparatus may be, but is not limited to, a mobile device (e.g. a mobile phone, a laptop, etc.), an electric vehicle (e.g. an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

For the electrical apparatus, the battery cell, the battery module, or the battery pack can be selected according to use requirements of the electrical apparatus.

FIG. 6 is a schematic view of an electrical apparatus 6 as an example. This electrical apparatus 6 is an all-electric vehicle, a hybrid electric vehicle, or a plug-in hybrid electric vehicle, and the like. In order to meet the requirements of the electrical apparatus 6 for high power and high energy density, a battery pack or a battery module may be used.

As another example, the electrical apparatus may be a mobile phone, a tablet, a laptop, etc. The electrical apparatus is generally required to be thin and light, and thus may use a battery cell as a power source.

### Examples

The following examples more specifically describe the contents disclosed in the embodiments of the present application. These examples are intended for illustrative purposes only, because various modifications and changes made within the scope of the contents disclosed in the present application will be apparent to those skilled in the art. Unless otherwise stated, all parts, percentages, and ratios reported in the following examples are on a mass basis, and all reagents used in the examples are all commercially available or can be obtained by synthesis according to conventional methods, and can be directly used without further treatment, and the instruments used in the examples are all commercially available.

### Example 1 Preparation of lithium-ion battery

### 1. Preparation of negative electrode plate

### Preparation of negative-electrode active material

The petroleum green coke was subjected to pulverizing treatment to obtain a coke raw material. The coke raw material was subjected to shaping treatment to obtain a precursor.

The precursor was subjected to graphitization treatment at a temperature of 3,000°C, and then sieved to obtain artificial graphite. Then, the artificial graphite is cladded with asphalt as an organic carbon source, and then subjected to carbonization treatment to obtain a negative-electrode active material, which included an artificial graphite particle and a carbon layer located on at least a portion of the surface of the artificial graphite particle. The negative-electrode active material was a primary particle.

### Preparation of negative electrode plate

A negative-electrode active material, carbon black (SuperP) as a conductive agent, sodium carboxymethyl cellulose (CMC-Na) as a thickener and styrene butadiene rubber (SBR) as a binder were fully stirred and mixed in a proper amount of deionized water as a solvent according to a weight ratio of 96.4:1:1.2:1.4 to form an uniform negative-electrode slurry. The negative-electrode slurry was evenly coated on the surface of a copper foil as a negative-electrode current collector, dried and then subjected to cold pressing to obtain a negative electrode plate.

### 2. Preparation of positive electrode plate

An aluminum foil was used as a positive-electrode current collector.
LiNi_{0.5}Co_{0.2}Mn_{0.3}O₂ (NCM523) as a positive-electrode active material, carbon black as a conductive agent and polyvinylidene fluoride (PVDF) as a binder were fully stirred and mixed in a proper amount of N-methyl pyrrolidone (NMP) as a solvent according to a mass ratio of 90:5:5 to form an uniform positive-electrode slurry. The positive-electrode slurry was evenly coated on a surface of an aluminum foil as a positive-electrode current collector, dried and then subjected to cold pressing to obtain a positive electrode plate.

### 3. Separator

A porous polyethylene (PE) film was used as a separator.

### 4. Preparation of electrolyte solution

In an environment with a water content of less than 10 ppm, non-aqueous organic solvents ethylene carbonate EC, ethyl methyl carbonate (EMC) and diethyl carbonate (DEC) were mixed in a volume ratio of 1:1:1 to obtain an electrolyte solution as a solvent, and then a lithium salt lithium hexafluorophosphate was mixed with the electrolyte solution as the solvent to formulate an electrolyte solution with a lithium salt concentration of 1 mol/L.

### 5. Preparation of battery cell

The positive electrode plate, the separator, and the negative electrode plate mentioned above were stacked in order, so that the separator was positioned between the positive electrode plate and the negative electrode plate to play an isolating role, and then wound to obtain an electrode assembly. The electrode assembly was placed into a shell of an outer package, dried, and then poured with the electrolyte solution; and subjected to vacuum packaging, standing, chemical formation, shaping and the like procedures to obtain a lithium-ion battery.

### Comparative Examples 1 and 2

A lithium-ion battery was prepared by a method similar to that of Example 1. The difference from Example 1 was that the particle size, especially Dᵥ50 of the negative-electrode active material in the Comparative Example 1 was adjusted.

### Examples 2-1 to 2-8

A lithium-ion battery was prepared by a method similar to that of Example 1. The difference from Example 1 was that the particle sizes of the negative-electrode active materials in the Examples 2-1 to 2-3 were adjusted.

### Examples 3-1 to 3-5

A lithium-ion battery was prepared by a method similar to that of Example 1. The difference from Example 1 was that the tap densities of the negative-electrode active materials in the Examples 3-1 to 3-5 were adjusted.

### Examples 4-1 to 4-3

A lithium-ion battery was prepared by a method similar to that of Example 1. The difference from Example 1 was that the graphitization degrees of the artificial graphite particles in the Examples 4-1 to 4-3 were adjusted.

### Examples 5-1 to 5-2

A lithium-ion battery was prepared by a method similar to that of Example 1. The difference from Example 1 was that the average thicknesses of the carbon layer on the negative-electrode active materials in the Examples 5-1 to 5-2 were adjusted.

Related parameters of the examples and the comparative examples were as shown in Table 1 below.

### Performance Test

### 1. performance test of lithium-ion battery

At -10°C, the lithium-ion batteries prepared in the examples and the comparative examples were adjusted to 80% SOC, charged at 20 C for 5 s and discharged at 20 C for 5 s. After 500 cycles of this process, the lithium-ion batteries were then fully charged at 0.33 C at room temperature and disassembled to observe the lithium plating state on the surface of the negative electrode plate. Among them, when the lithium plating area on the surface of the negative electrode plate was less than 5%, it was considered as slight lithium plating; when the lithium plating area was from 5% to 40%, it is considered as moderate lithium plating; and when the lithium plating area was greater than 40%, it was considered as severe lithium plating.

### Test Result

The test results were as shown in Table 1.

**Table 1**

| Item | Negative-electrode active material | | | | | | | Negative electrode plate |
|---|---|---|---|---|---|---|---|---|
| | Dᵥ50 (µm) | Dᵥ1 (µm) | Dᵥ99 (µm) | Tap density (g/cm³) | Gram capacity (mAh/g) | Graphitization degree of artificial graphite particle (%) | Average thickness of carbon layer (nm) | lithium plating condition |
| Comparative Example 1 | 11 | 4.0 | 36 | 1.10 | 338 | 92.0 | 3 | Severe lithium plating |
| Comparative Example 2 | 4 | 2.0 | 30 | 0.90 | 335 | 92.0 | 3 | Moderate lithium plating |
| Example 1 | 4 | 1.0 | 16 | 1.10 | 335 | 92.0 | 3 | No lithium plating |
| Example 2-1 | 3 | 0.8 | 14 | 1.10 | 330 | 92.0 | 3 | No lithium plating |
| Example 2-2 | 6 | 1.3 | 16 | 1.10 | 338 | 92.0 | 3 | Slight lithium plating |
| Example 2-3 | 7 | 1.5 | 18 | 1.10 | 339 | 92.0 | 3 | Slight lithium plating |
| Example 2-4 | 4 | 0.9 | 16 | 1.10 | 335 | 92.0 | 3 | No lithium plating |
| Example 2-5 | 4 | 1.5 | 16 | 1.10 | 335 | 92.0 | 3 | Slight lithium plating |
| Example 2-6 | 4 | 1.0 | 12 | 1.10 | 335 | 92.0 | 3 | No lithium plating |
| Example 2-7 | 4 | 1.0 | 16 | 1.10 | 335 | 92.0 | 3 | No lithium plating |
| Example 2-8 | 4 | 1.0 | 18 | 1.10 | 335 | 92.0 | 3 | No lithium plating |
| Example 3-1 | 4 | 1.0 | 16 | 0.78 | 335 | 92.0 | 3 | No lithium plating |
| Example 3-2 | 4 | 1.0 | 16 | 0.80 | 335 | 92.0 | 3 | No lithium plating |
| Example 3-3 | 4 | 1.0 | 16 | 0.90 | 335 | 92.0 | 3 | No lithium plating |
| Example 3-4 | 4 | 1.0 | 16 | 1.10 | 335 | 92.0 | 3 | No lithium plating |
| Example 3-5 | 4 | 1.2 | 18 | 1.20 | 335 | 92.0 | 3 | No lithium plating |
| Example 4-1 | 4 | 1.0 | 16 | 1.10 | 330 | 91.0 | 3 | Slight lithium plating |
| Example 4-2 | 4 | 1.0 | 16 | 1.10 | 330 | 91.5 | 3 | No lithium plating |
| Example 4-3 | 4 | 1.0 | 16 | 1.10 | 330 | 93.0 | 3 | Slight lithium plating |
| Example 5-1 | 4 | 1.0 | 16 | 1.10 | 335 | 92.0 | 2 | Slight lithium plating |
| Example 5-2 | 4 | 1.0 | 16 | 1.10 | 333 | 92.0 | 8 | No lithium plating |

It could be seen from Table 1 that the Dᵥ50 and Dᵥ1 of the negative-electrode active material in Comparative Example 1 were both large. Under low temperature conditions, the polarization of the battery increased, the active specific surface area of the negative-electrode interface reaction decreased, and the lithium ions transmitted to the surface of the negative electrode plate could not participate in the interface reaction in time, resulting in easy lithium plating at the interface. In addition, due to the large Dᵥ50, the transmission distance of lithium ions increased at a high SOC state, and the low-temperature charging capability deteriorated.

In Comparative Example 2, Dᵥ1 was relatively large, and the content of fine powder in the negative-electrode active material was relatively small, which was not conducive to the rapid transfer of lithium ions and electrons under a high SOC state. The too large Dᵥ99 made the consistency of particle lithium intercalation relatively poor, which was easy to aggravate polarization phenomenon and was not conducive to the rapid charging of battery cells.

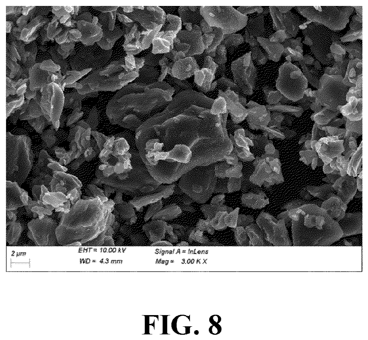

Compared with Comparative Examples 1 and 2, and in combination with FIGs. 7 and 8, in the embodiments of the present application, the Dᵥ99, Dᵥ50 and Dᵥ1 of the negative-electrode active material were adjusted within an appropriate range, which could improve the consistency of lithium intercalation while improving the diffusion rate of lithium ions, thereby improving the low-temperature fast charging performance of the battery cell.

Although illustrative embodiments have been shown and described, it should be understood by those skilled in the art that the aforementioned embodiments should not be construed as limitations on the present application, and that changes, replacements and modifications may be made to the embodiments without departing from the spirit, principles and scope of the present application.

## Claims

1. A negative-electrode active material comprising an artificial graphite particle and a carbon layer disposed on at least a portion of a surface of the artificial graphite particle, wherein
a volume average particle size Dᵥ50 of the negative-electrode active material satisfies: 3 µm ≤ Dᵥ50 ≤ 7 µm; and
a volume distribution particle size Dᵥ1 of the negative-electrode active material satisfies: Dᵥ1 ≤ 1.5 µm.

2. The negative-electrode active material according to claim 1, wherein 0.8 µm ≤ Dᵥ1 ≤ 1.5 µm; optionally, 0.9 µm ≤ Dᵥ1 ≤ 1.3 µm; and further optionally, 0.9 µm ≤ Dᵥ1 ≤ 1.0 µm.

3. The negative-electrode active material according to claim 1 or 2, wherein Dᵥ99 ≤ 18 µm; and optionally, 12 µm ≤ Dᵥ99 ≤ 18 µm.

4. The negative-electrode active material according to any one of claims 1 to 3, wherein the negative-electrode active material comprises a primary particle, and a number proportion of the primary particle in the negative-electrode active material is ≥ 90%; and optionally ≥ 95%.

5. The negative-electrode active material according to any one of claims 1 to 4, wherein
the negative-electrode active material has a gram capacity of 330 mAh/g to 340 mAh/g; and/or
the negative-electrode active material has tap density of 0.78 g/cm³ to 1.2 g/cm³.

6. The negative-electrode active material according to any one of claims 1 to 5, wherein
a graphitization degree of the artificial graphite particle is 90% to 93%, and optionally 91% to 93%.

7. The negative-electrode active material according to any one of claims 1 to 6, wherein
an average thickness of the carbon layer is ≥ 2 nm, and optionally 2 nm to 20 nm.

8. A negative electrode plate comprising a negative-electrode current collector and a negative-electrode film layer that is disposed on at least one surface of the negative-electrode current collector and comprises a negative-electrode active material, wherein the negative-electrode active material comprises the negative-electrode active material according to claims 1 to 7.

9. A battery comprising the negative electrode plate according to claim 8.

10. An electrical apparatus comprising the battery according to claim 9.
